# EUROPEAN PATENT SPECIFICATION

(11) **EP 2 358 531 B1**
(45) Date of publication and mention of the grant of the patent: **11.02.2015**
(21) Application number: 08879017.5
(22) Date of filing: 15.12.2008
(51) Int. Cl.: B32B 27/10, B32B 27/32, B32B 27/20, C08K 3/00, D21H 19/56, D21H 19/38, D21H 19/80, B41M 5/50

(54) **IMAGEABLE ARTICLE**
MIT EINER ABBILDUNG VERSEHBARER ARTIKEL
ARTICLE IMAGEABLE

(43) Date of publication of application: 24.08.2011
(73) Proprietor: Hewlett-Packard Development Company, L.P., Houston, TX 77070 (US)
(72) Inventor: STEICHEN, Christine, E., San Diego CA 92127-1899 (US); ALONSO, Julio, Cesar, San Diego CA 92127-1899 (US); FU, Xulong, San Diego CA 92127-1899 (US); PAL, Lokendra, San Diego CA 92127-1899 (US)
(74) Representative: Liesegang, Eva
(86) International application number: PCT/US2008/086898
(87) International publication number: WO 2010/071632

(56) References cited:
- EP-A2- 0 326 410
- GB-A- 2 353 038
- US-A- 5 457 016
- US-A- 5 466 519
- US-A- 5 466 519
- US-A1- 2004 043 227
- US-A1- 2006 115 627
- US-A1- 2006 115 633
- US-A1- 2007 031 615
- DATABASE WPI Week 200478 Thomson Scientific, London, GB; AN 2004-788614 XP002676705, -& JP 2004 299383 A (NIPPON SEISHI KK) 28 October 2004 (2004-10-28)

## Description

### BACKGROUND

Traditional photographic bases consist of a resin layer coated onto both the front (imaging) and back side of a raw base paper. An imaging layer is coated onto the frontside of the photobase. This coating creates an unbalanced stress in the final product. For proper handling of the media through the coating, converting and printer imaging processes, various curl control designs have been used.

Curl control is typically achieved via three common means: (1) increasing the basis weight of the raw base (more fiber increases the caliper/stiffness, thereby reducing the resulting curl of the coated product); (2) applying a coating to the backside to create a balancing stress on the backside that offsets the frontside coating (typically used for swellable); and (3) applying unbalanced ratios of resin between the front and backside of the raw base (more resin on the backside relative to the frontside creates an unbalanced base that has a pre-stress designed into the resin structure; a ratio of low/high density resin may also be used to enhance the degree of unbalancedness). In each of these options, the material and process costs are generally significant.

### BRIEF DESCRIPTION OF THE DRAWINGS

Features and advantages of embodiments of the present disclosure will become apparent by reference to the following detailed description and drawings, in which:
Figure 1 is a schematic flow diagram showing one embodiment of steps to achieve an imageable article according to the present disclosure;
Figure 2 is a schematic diagram detailing layers on both sides of raw base paper in a prior art embodiment of an imageable article of swellable photo product construction;
Figure 3 is a schematic diagram detailing layers on both sides of raw base paper in a prior art embodiment of an imageable article of porous photo product construction;
Figure 4 is a schematic diagram detailing layers on both sides of raw base paper in an embodiment of an imageable article of the present disclosure;
Figure 5 is a schematic diagram detailing resin layers on both sides of raw base paper, the front side being non-filled and the back side being filled, in an embodiment of an imageable article of the present disclosure;
Figure 6 is a schematic diagram detailing filled resin layers on both sides of raw base paper in an embodiment of an imageable article of the present disclosure;
Figure 7 is a graph plotting Composite Machine Direction (MD) Elastic Modulus vs. Percent Filler Level for separate samples of three different fillers with LDPE in an embodiment of an imageable article of the present disclosure; and
Figure 8 is a graph plotting Composite Cross Direction (CD) Elastic Modulus vs. Percent Filler Level for separate samples of three different fillers with LDPE in an embodiment of an imageable article of the present disclosure.

### DETAILED DESCRIPTION

When an inkjet or other imaging layer is applied to a photobase of an imageable article, it will exert a force that must be balanced by either the photobase or an additional coating on the non-imaging side. The result of an unbalance between the front side and back side forces is typically referred to as curl. As the fully coated product is exposed to different environmental conditions (temperature and relative humidity), the force exerted by the imaging layer coating on the imageable article will change. A more rigid photobase will be better able to resist these forces and changes in force exerted by the imaging layer of the imageable article.

In a non-limiting example, a paper having desirable qualities for use as a photobase of an imageable article includes fibers that include chemical tree wood fibers with an internal filler. Such tree wood fibers can be virgin or recycled. In another non-limiting example, non-filled tree-based paper can be used. In yet another non-limiting example, paper including non-wood plant fiber products (e.g., bamboo, bagasse, etc.) can be used.

A way to control curl is to put a coating layer onto the backside of the photobase of the imageable article which balances the front side coating both in terms of kind of material and in terms of quantity of material. However, this is typically a somewhat costly option. A less expensive variation of this option (particularly used in porous imaging coatings) is to compensate for curl by negatively biasing the photobase by placing more PE (polyethylene) on the back side. By using high density polyethylene (HDPE), or a mixture of low density polyethylene (LDPE) and HDPE (which is stiffer than LDPE), the elastic modulus of the back side layer can be increased while reducing the total amount of PE required. In such a situation, however, the backside PE amount can easily be twice the front side PE amount for a porous image coating application.

HDPE and/or LDPE, both polyethylenes (PE), are well suited for the purpose of providing a rigid and effective photobase for an imageable article. They contrast with other polymers sometimes used in coating photographic substrates, such as the non-limiting examples of polypropylene (PP), polyethylene terephthalate (PET), polystyrene, polycarbonate, and polyamide. When used under the conditions of the present disclosure, such materials as PP and PET tend to adopt the shape of the form, such as a roll core, that the coated substrate is often wrapped on after manufacturing. Also, such materials as PP and PET are not as easily used in the screw extruder design optimized for HDPE and/or LDPE that is used in some embodiments of an imageable article of the present disclosure. For all of these reasons, PEs in general, and HDPE and LDPE in particular, not PP and PET, are the resin materials for use with the filler materials in an imageable article of the present disclosure.

Bending stiffness and elastic modulus are not the same thing. Elastic modulus is an intensive property of the material. Bending stiffness is an extensive property of the composite body. Bending stiffness is dependent on both (1) material (i.e. Elastic Modulus) and (2) shape and boundary conditions of the solid body. In the case of the trial samples constructed and discussed in the Examples, the shape and boundary conditions were held as constant as was physically possible for the experimental design. As a result, an increase in elastic modulus in the materials gave a photobase of an imageable article with a higher bending stiffness and rigidity at a given thickness (e.g., product construction).

Filler (e.g., calcium carbonate) is added to the polyolefin (e.g., polyethylene) used for filled resin layers used for the backside or both the backside and the frontside for photographic basepaper of an imageable article. In the case of filler used on the backside of the photobase, it produces a negative curl. When filler is used in both the front side and the back side polyethylene layers, the overall bending stiffness of the photobase of an imageable article increases, but the base loses its curl bias toward the back side. In some coating applications, such loss of curl bias is acceptable (e.g., 2-side coating applications). The filler content can be 3% to 60% of total resin/filler weight. It may be added either before or during the extrusion process. In another embodiment, the filler content can be from about 5% to about 50% of total resin/filler weight. In yet another embodiment, the filler content can be from about 10% to about 40% of total resin/filler weight.

To add it before extrusion, filler is compounded off-line to create a filler enriched masterbatch. This master batch is then combined in the extruder hopper with other master batches containing other needed additives to produce the complete extrusion film recipe. The film is extrusion-coated to raw base paper to produce an optimized inkjet photobase of an imageable article. A sample of this construction can be made with an extruder.

In an embodiment, liquid coating layers can be applied on both the image side and back side extrusion layers of the photobase of the imageable article. The liquid coating layers form an imaging layer on the image side and, in the case of swellable media, a curl control layer on the back side.

The present disclosure discloses the use of an inexpensive filler (non-limiting examples of which include calcium carbonate (CaCO₃), zeolite, calcined clay, silica, talc, alumina, aluminum trihydrate (ATH), calcium silicate (CaSiO₃), combinations thereof, etc.) to be extruded within the resin layer(s) to increase the effective bending stiffness of the resin layer. For curl control, this additional bending stiffness is very useful on the back (non-imaging) side of the photobase of an imageable article. The materials described in this disclosure do not include the materials used in common practice with resin photobase (e.g., titanium dioxide (TiO₂)). Existing practice for making photobase commonly uses titanium dioxide as an opacifying agent in the resin layer(s). It is not used as a stiffening material. Its particles are very small and expensive relative to fillers such as calcium carbonate.

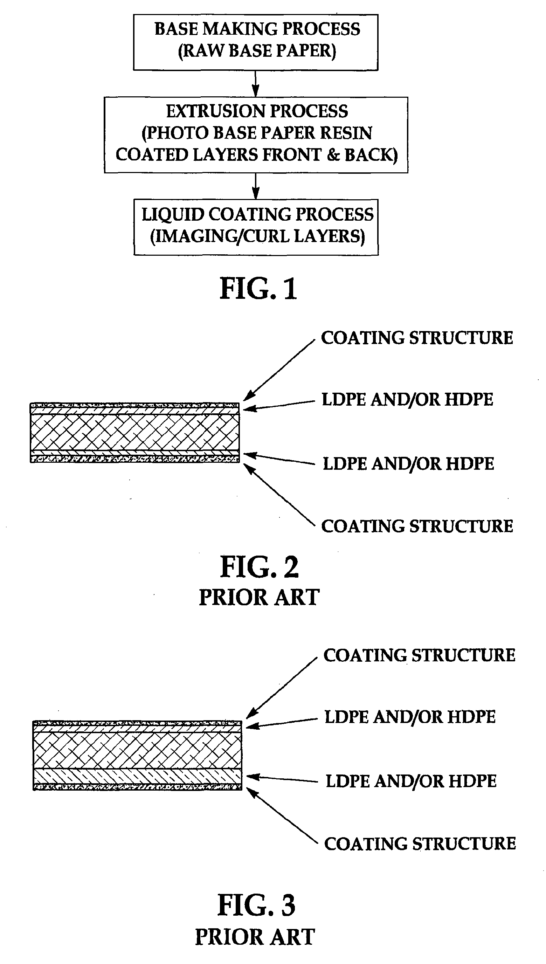

Referring now to the figures, Figure 1 depicts a schematic flow diagram which shows the steps leading to the photobase of an embodiment of an imageable article of the present disclosure. First, a rawbase paper is obtained from a base paper-making process. The rawbase paper is then extrusion coated with resin layer on both front (image) and back sides to produce a photobase of an imageable article. In the next step, furthermore, the front of the photobase is then liquid coated with imaging layers. In the case of some products (e.g., swellable media), an additional curl control layer can be liquid coated on the back side of the photobase of an imageable article.

Figure 2 is a schematic drawing of the layers on raw base paper of an imageable article in a prior art swellable photo product construction. As shown, the raw base paper is first extrusion coated on both sides with a non-filled resin layer of LDPE, HDPE or a blend of LDPE/HDPE to achieve a film that provides desired surface properties and a moisture barrier. In the case of the front (image) side, the non-filled resin layer often has a gloss or matte texture. In the case of the back side, the non-filled resin layer is usually balanced in material amount with the front side non-filled resin layer. The front side of the paper coated with the non-filled resin layer can be liquid coated with at least one and possibly multiple imaging layers. The back side of the paper coated with the non-filled resin layer can be liquid coated with at least one and possibly multiple curl control layers

Figure 3 is a schematic drawing of the layers on raw base paper of an imageable article in a prior art porous photo product construction. As shown, the raw base paper is first coated on both sides with LDPE, HDPE or a blend of LDPE/HDPE to achieve a non-filled resin layer. In the case of the front (image) side, the non-filled resin layer often has a gloss or matte texture. In the case of the back side, the non-filled resin layer is usually highly unbalanced (up to double the amount) relative to the front (image) non-filled resin layer. Each side of the paper coated with the non-filled resin layers can then be liquid coated with an additional imaging or curl layer, respectively. The front non-filled resin layer of the photobase of an imageable article is coated with imaging layers. The back non-filled resin layer of the porous photo product may be coated with a curl control layer, but it is not typically required.

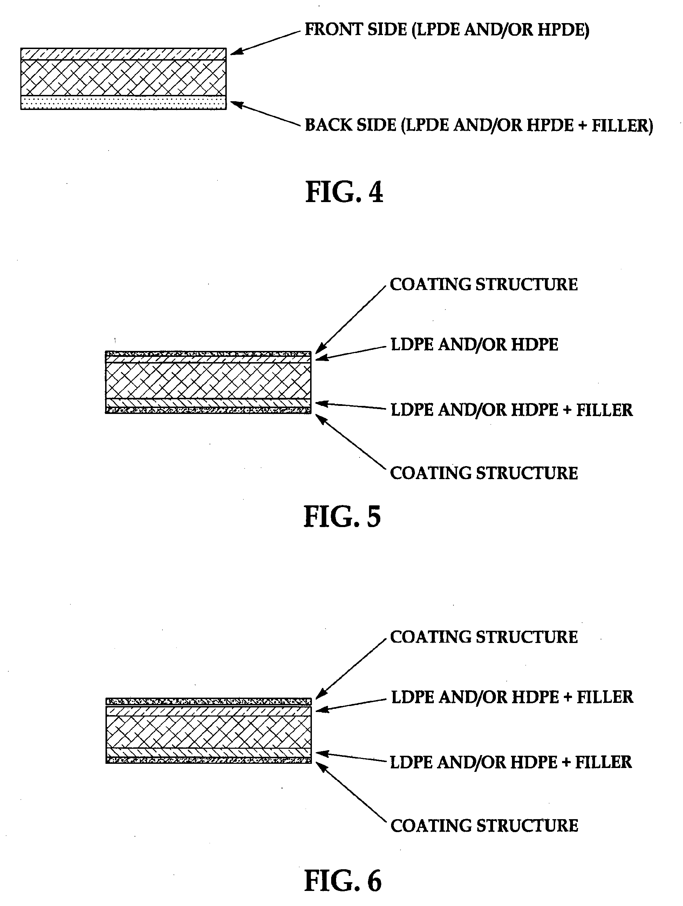

Figure 4 is a schematic drawing of the layers on raw base paper of an imageable article in the embodiment discussed in the Example. As shown, the raw base paper is first extrusion-coated with a non-filled resin layer on the front (image) side with LDPE or a combination of LDPE and HDPE to achieve a moisture barrier and surface texture. Also shown, the raw base paper is extrusion-coated with a filled resin layer on the back side with LDPE or a combination of LDPE and HDPE, and at least one filler, such as, but not limited to calcium carbonate, zeolite, silica, talc, alumina, aluminum trihydrate (ATH), calcium silicate, kaolin, calcined clay and combinations thereof. The back side filled resin layer can function as both a moisture barrier and curl control layer. Alternatively, in a control in which zero filler is used in both the back and front layer, the back non-filled resin layer can equal the front non-filled resin layer in composition and construction.

Figure 5 is a schematic drawing of the layers on raw base paper of an imageable article in an embodiment of the present disclosure. As shown, the raw base paper is first extrusion-coated on the front (image) side with HDPE, LDPE or a combination of LDPE and HDPE to achieve a moisture barrier and surface texture. Such a non-filled resin layer can have a gloss or matte texture. Also shown, the raw base paper is extrusion-coated on the back side with a filled resin layer which can serve as both a moisture barrier layer and a curl control layer containing HDPE, LDPE, or a combination of LDPE and HDPE, and a filler such as calcium carbonate, zeolite, calcined clay, silica, talc, alumina, aluminum trihydrate, calcium silicate, or combinations thereof. The front (image) side of the paper coated with the non-filled resin layer is then liquid coated with imaging layer(s). In the case of an imageable article with swellable media, the back side of the paper extrusion coated with the filled resin layer can have a liquid coated outer layer for additional curl control, but it can be relatively reduced or increased depending on the requirements for such a coating. In an imageable article with porous type photobase, such a back curl control coating is usually completely absent, or it is much reduced (if present at all).

Figure 6 is a schematic drawing of the layers on raw base paper of an imageable article in an embodiment of the present disclosure. As shown, the raw base paper is first extrusion-coated on the front (image) side and the back side with a filled resin layer including HDPE, LDPE, or a combination of LDPE and HDPE, and a filler such as, but not limited to, calcium carbonate, zeolite, calcined clay, silica, talc, alumina, aluminum trihydrate, calcium silicate, or combinations thereof to achieve a moisture barrier layer. When the resin layer on the back side of the photobase is filled, it produces a negative curl. When filler is used in both the front side and the back side resin layers, this increases the overall bending stiffness. However, in such a case, the base loses its curl bias toward the back side. In the non-limiting example of a coating application imageable on both sides, such loss of curl bias is acceptable. Such a filled resin layer can provide both a moisture barrier and a gloss or matte texture on the front (image) side. On the back side, this filled resin layer can provide both a moisture barrier and a gloss or matte texture. The front (image) side of the imageable article coated with the filled resin layer is liquid coated with imaging layer(s). As described above, the back side of the imageable article coated with filled resin layer can have a liquid coated, outer coating structure. In such an embodiment, the outer coating structure on the filled resin layer on the back side functions as an imaging layer.

The photobase of an imageable article that is created from this application can be applied in multiple imaging systems, non-limiting examples of which include: porous/inkjet, swellable/inkjet, dye-sub, thermal transfer, thermal, piezo, electrostatic, etc.

Advantages of the above system include, but are not limited to the following:
a) It increases the resin layer bending stiffness in an imageable article by adding high modulus fillers. To achieve and maintain similar levels of bending stiffness, the backside resin material may be reduced by up to 60% when using a filled resin construction.
b) In some cases, it eliminates the need for backside coating (i.e. the coating covering the backside resin layer) with the resultant material and process cost savings. This is most commonly found on swellable photo imaging formulations. Porous coating typically uses an unbalanced photobase in an imageable article without the need for a backside coating.
c) It reduces the cost of materials in the resin layer in an imageable article by substituting low cost filler for the high cost polyolefin. Given increasing oil prices, any removal of resin generates significant product cost savings. Worldwide supply and demand issues may further increase the resin costs. For example, typical materials costs are $2-$3/lb for resin (PE) contrasted with $0.15/lb for filler (calcium carbonate).

To further illustrate embodiment(s) an imageable article of the present disclosure, various examples of media are given herein. It is to be understood that these are provided for illustrative purposes and are not to be construed as limiting the scope of the disclosed embodiment(s).

### Example

Calcium carbonate was added to the LDPE used for filled resin layers used for the backside of photographic basepaper of an imageable article. Filler was compounded off-line to create a filler enriched masterbatch. This master batch was then combined in the extruder hopper with other master batches containing other additives to produce the complete extrusion film recipe. The film was extruded and attached to raw base paper to produce an optimized inkjet photobase of an imageable article. Sample constructions for the filled resin layer or layers were from approximately 10% to 40% calcium carbonate; from approximately 3 to 10% for calcined clay; from approximately 5 to 10% for calcium silicate; and the balance was LDPE.

Table 1 below sets out typical materials and thicknesses for each layer shown in Figure 4.

**Table 1 Target Construction**

| Layer | Material Used | Thickness |
|---|---|---|
| Frontside PE | LDPE | 50 microns |
| Raw base paper | Filled paper base (wood fiber, filler: calcium carbonate and additives | 200 microns |
| Backside PE | LDPE + Filler level/type (trial variables) | 50 microns |

Each sample was constructed as described in Table 2. The trial variable settings are shown in Table 2.

**Table 2 Samples Construction Details**

| | Back Side Layer | |
|---|---|---|
| Variants | Filler Type | Target Filler Level |
| Sample 1 | None | None |
| Sample 2 | Calcium Carbonate | 10% |
| Sample 3 | Calcium Carbonate | 25% |
| Sample 4 | Calcium Carbonate | 40% |
| Sample 5 | Calcined Clay | 3% |
| Sample 6 | Calcined Clay | 6% |
| Sample 7 | Calcined Clay | 10% |
| Sample 8 | Calcium Silicate | 5% |
| Sample 9 | Calcium Silicate | 10% |

To evaluate the usefulness of a photobase construction of an imageable article, the tensile stiffness index (TSI) was measured for the composite construction. TSI was measured for both machine direction (MD) and cross-machine direction (CD). MD is the axis that runs parallel to the travel direction of the web on the machine. The directionality of the raw base paper is the overwhelming contributor to the MD vs. CD difference. Since it was a composite structure which was evaluated in this design, results from both the MD and CD components are presented. Addition of filler provided improvements to elastic modulus in both MD and CD.

The individual films could not be measured for TSI; therefore the composite construction was used. The elastic modulus is a calculation based on the physical measurements for TSI and density of the composite structure of an imageable article.

The differences between the trial conditions demonstrate the physical (structural) improvements to the product construction that resulted from the present disclosure. In the experimental samples described in Table 2, the addition of filler gave increasing density and TSI measurements as the level of filler increased. A higher elastic modulus for a composite photobase construction of an imageable article gave a substrate with a greater resistance to deflection from the imaging layer.

A photobase of an imageable article was constructed as shown in Figure 4. This photobase included a front side LDPE layer, raw base paper and a back side LDPE layer containing filler. In the experimental design, the same LDPE and film thicknesses were used in both the front and back side layers. The only variables were the type and level of filler added to the back side. For the zero level of filler, the front and back sides were identical in construction (pure LDPE). For the purposes of this experiment, the imaging layer was not applied to the photobase.

Samples were constructed using a single screw extruder to extrude the front and back side PE layers onto the raw base paper. The experiments included different filler types and filler levels. Table 2 shows the filler types and target filler level of all nine samples. After the composite photobase samples were constructed, a series of tests was conducted to determine the physical properties of the composite structure of the imageable article. Physical properties were also obtained for each extruded film.

The TSI of the composite structure (e.g. photobase) of the imageable article for each sample was measured using the Lorentzen & Wettre TSO device (commonly described as L&W TSO tester). It used an ultrasonic method to more accurately measure this property non-destructively. Other destructive tools exist to directly measure elastic modulus of a cut sample (e.g., Instron tester). However, small variations in the sample preparation and mounting into the tool can give significant variation in the test data. For this reason, the L&W TSO tester was chosen for analyzing the samples.

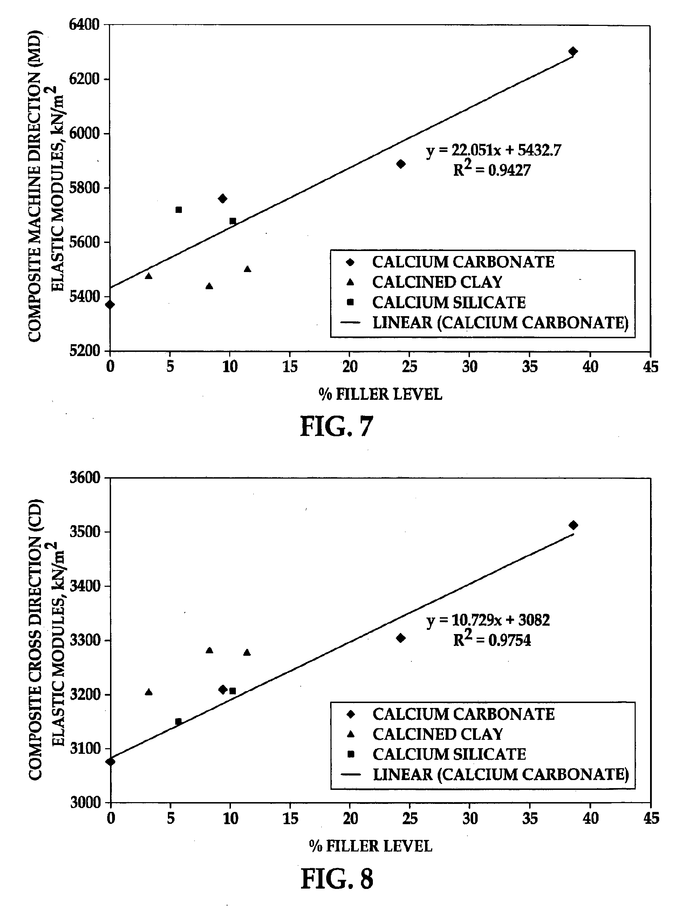

The elastic modulus for each composite structure of the imageable article was calculated from the physical property data (composite TSI and density). The experimental results shown in Figures 7 and 8 summarize the use of three different fillers. The calcium carbonate was more easily compounded to higher levels in the LDPE, therefore it was possible to construct photobase designs that used higher levels of filler in the back side. All three of the fillers chosen for this experimental work demonstrated similar trends of improved elastic modulus and density with increasing filler level.

Figure 7 is a graph plotting Composite Machine Direction (MD) Elastic Modulus (Y axis) against Percent Filler Level (X axis) for separate samples of the three different fillers (calcium carbonate, calcined clay and calcium silicate) extruded with LDPE described in Table 2. The calcium carbonate filler was used at three different levels as well as 0%. The other fillers (calcined clay and calcium silicate) were only used in the 3% to 10% Filler Level range.

Figure 8 is a graph plotting Composite Cross Direction (CD) Elastic Modulus (Y Axis) against Percent Filler Level (X axis) by the separate samples of the three different fillers (calcium carbonate, calcined clay and calcium silicate) extruded with LDPE described in Table 2. The calcium carbonate filler was used at three different levels as well as 0%. The other fillers (calcined clay and calcium silicate) were only used in the 3% to 10% Filler Level range.

The addition of filler reduced the overall cost of the composite filler-resin coated layer of the imageable article by substituting low cost filler for the high cost polyolefin. Further, improved elastic modulus of composite filler-resin coated layer of the imageable article required less amount of this layer to balance the curl therefore further enabling the lower overall cost.

While several embodiments have been described in detail, it will be apparent to those skilled in the art that the disclosed embodiments may be modified. Therefore, the foregoing description is to be considered exemplary rather than limiting.
The invention for which protection is sought is defined in the following claims.

## Claims

1. An imageable article, comprising:
a backside filled resin layer bonded to a back side of a paper substrate;
wherein the backside filled resin layer includes: resin which is a combination of low density polyethylene (LDPE) and high density polyethylene (HDPE); and a filler selected from the group consisting of calcium carbonate, zeolite, silica, talc, alumina, aluminum trihydrate (ATH), calcium silicate, kaolin, calcined clay, and combinations thereof;
wherein the backside filled resin layer includes from 3 weight% to 60 weight% of the filler;
said imageable article further comprising:
an image side filled resin layer bonded to the image side of the paper substrate; and
at least one coating layer bonded to both the image side filled resin layer and the back side filled resin layer;
wherein the image side filled resin layer includes: resin selected from the group consisting of low density polyethylene (LDPE), and a combination of low density polyethylene (LDPE) and high density polyethylene (HDPE); and a filler selected from the group consisting of calcium carbonate, zeolite, silica, talc, alumina, aluminum trihydrate (ATH), calcium silicate, kaolin, calcined clay, and combinations thereof;
and wherein the image side filled resin layer includes from 3 weight% to 60 weight% of the filler.

2. The imageable article of claim 1, wherein the filled resin layer includes from 5 weight% to 50 weight% of the filler.

3. The imageable article of any of claims 1 or 2, wherein the filled resin layer includes from 10 weight% to 40 weight% of the filler.

4. The imageable article of any of claims 1 through 3, wherein the at least one coating layer is a swellable or porous imaging layer.

5. A method of coating a paper substrate with a filled resin layer, comprising the step of extruding a backside filled resin layer onto a back side of a paper substrate;
wherein the backside filled resin layer includes: resin which is a combination of low density polyethylene (LDPE) and high density polyethylene (HDPE); and a filler selected from the group consisting of calcium carbonate, silica, talc, aluinina, aluminum trihydrate (ATH), calcium silicate, kaolin, calcined clay, and combinations thereof;
and wherein the backside filled resin layer includes from 3 weight% to 60 weight% of the filler;
said method further comprising:
extruding an image side filled resin layer onto the image side of the paper substrate; and
wet coating at least one coating layer onto both the image side filled resin layer and the back side filled resin layer;
wherein the image side filled resin layer includes: resin selected from the group consisting of low density polyethylene (LDPE), and a combination of low density polyethylene (LDPE) and high density polyethylene (HDPE); and a filler selected from the group consisting of calcium carbonate, zeolite, silica, talc, alumina, aluminum trihydrate (ATH), calcium silicate, kaolin, calcined clay, and combinations thereof;
and wherein the image side filled resin layer includes from 3 weight% to 60 weight% of the filler.

6. The method of claim 5, wherein the filled resin layer includes from 5 weight% to 50 weight% of the filler.

7. The method of any of claims 5 or 6, wherein the filled resin layer includes from 10 weight% to 40 weight% of the filler.

8. The method of any of claims 5 through 7, wherein the at least one coating layer is a swellable or porous imaging layer.

## Patentansprüche

1. Bebilderbarer Gegenstand, der Folgendes umfasst:
eine rückseitige gefüllte Harzschicht, die an eine Rückseite eines Papiersubstrats gebunden ist,
wobei die rückseitige gefüllte Harzschicht Folgendes enthält: Harz, das eine Kombination von Polyethylen niedriger Dichte (LPDE) und Polyethylen hoher Dichte (HDPE) ist, und einen Füllstoff, der ausgewählt ist aus der Gruppe bestehend aus Calciumcarbonat, Zeolith, Silica, Talk, Aluminiumoxid, Aluminiumtrihydrat (ATH), Calciumsilicat, Kaolin, kalziniertem Ton und Kombinationen davon;
wobei die rückseitige gefüllte Harzschicht 3 Gew.-% bis 60 Gew.-% des Füllstoffs enthält;
wobei der bebilderbare Gegenstand ferner Folgendes umfasst:
eine bilderseitige gefüllte Harzschicht, die an die Bilderseite des Papiersubstrat gebunden ist; und
zumindest eine Beschichtungsschicht, die sowohl an die bilderseitige gefüllte Harzschicht als auch an die rückseitige gefüllte Harzschicht gebunden ist;
wobei die bilderseitige gefüllte Harzschicht Folgendes enthält: Harz, das ausgewählt ist aus der Gruppe bestehend aus Polyethylen niedriger Dichte (LPDE) und einer Kombination von Polyethylen niedriger Dichte (LDPE) und Polyethylen hoher Dichte (HDPE), und einen Füllstoff, der ausgewählt ist aus der Gruppe bestehend aus Calciumcarbonat, Zeolith, Silica, Talk, Aluminiumoxid, Aluminiumtrihydrat (ATH), Calciumsilicat, Kaolin, kalziniertem Ton und Kombinationen davon;
und wobei die bilderseitige gefüllte Harzschicht 3 Gew.-% bis 60 Gew.-% des Füllstoffs enthält.

2. Bebilderbarer Gegenstand nach Anspruch 1, wobei die gefüllte Harzschicht 5 Gew.-% bis 50 Gew.-% des Füllstoffs enthält.

3. Bebilderbarer Gegenstand nach einem der Ansprüche 1 und 2, wobei die gefüllte Harzschicht 10 Gew.-% bis 40 Gew.-% des Füllstoffs enthält.

4. Bebilderbarer Gegenstand nach einem der Ansprüche 1 bis 3, wobei die zumindest eine Beschichtungsschicht eine quellbare oder poröse Bildgebungsschicht ist.

5. Verfahren zum Beschichten eines Papiersubstrats mit einer gefüllten Harzschicht, das den Schritt des Extrudierens einer rückseitigen gefüllten Harzschicht auf eine Rückseite eines Papiersubstrat umfasst;
wobei die rückseitige gefüllte Harzschicht Folgendes enthält: Harz, das eine Kombination von Polyethylen niedriger Dichte (LPDE) und Polyethylen hoher Dichte (HDPE) ist; und einen Füllstoff, der ausgewählt ist aus der Gruppe bestehend aus Calciumcarbonat, Silica, Talk, Aluminiumoxid, Aluminiumtrihydrat (ATH), Calciumsilicat, Kaolin, kalziniertem Ton und Kombinationen davon;
und wobei die rückseitige gefüllte Harzschicht 3 Gew.-% bis 60 Gew.-% des Füllstoffs enthält;
wobei das Verfahren ferner Folgendes umfasst:
Extrudieren einer bilderseitigen gefüllten Harzschicht auf die Bilderseite des Papiersubstrats; und
Nassbeschichten zumindest einer Beschichtungsschicht auf sowohl die bilderseitige gefüllte Harzschicht als auch die rückseitige gefüllte Harzschicht;
wobei die bilderseitige gefüllte Harzschicht Folgendes enthält: Harz, das ausgewählt ist aus der Gruppe bestehend aus Polyethylen niedriger Dichte (LPDE) und einer Kombination von Polyethylen niedriger Dichte (LDPE) und Polyethylen hoher Dichte (HDPE); und einen Füllstoff, der ausgewählt ist aus der Gruppe bestehend aus Calciumcarbonat, Zeolith, Silica, Talk, Aluminiumoxid, Aluminiumtrihydrat (ATH), Calciumsilicat, Kaolin, kalziniertem Ton und Kombinationen davon;
und wobei die bilderseitige gefüllte Harzschicht 3 Gew.-% bis 60 Gew.-% des Füllstoffs enthält.

6. Verfahren nach Anspruch 5, wobei die gefüllte Harzschicht 5 Gew.-% bis 50 Gew.-% des Füllstoffs enthält.

7. Verfahren nach einem der Ansprüche 5 und 6, wobei die gefüllte Harzschicht 10 Gew.-% bis 40 Gew.-% des Füllstoffs enthält.

8. Verfahren nach einem der Ansprüche 5 bis 7, wobei die zumindest eine Beschichtungsschicht eine quellbare oder poröse Bildgebungsschicht ist.

## Revendications

1. Article imageable, comprenant :
une couche de résine chargée côté arrière, liée à un côté arrière d'un substrat de papier ;
dans lequel la couche de résine chargée côté arrière comprend : une résine qui est une combinaison de polyéthylène basse densité (LDPE) et de polyéthylène haute densité (HDPE) ; et une charge choisie dans le groupe consistant en carbonate de calcium, zéolite, silice, talc, alumine, trihydrate d'aluminium (ATH), silicate de calcium, kaolin, argile calcinée et leurs combinaisons ;
dans lequel la couche de résine chargée côté arrière comprend de 3 % en poids à 60 % en poids de la charge ;
ledit article imageable comprenant en outre :
une couche de résine chargée côté image, liée au côté image du substrat de papier ; et
au moins une couche de revêtement liée à la fois à la couche de résine chargée côté image et à la couche de résine chargée côté arrière ;
dans lequel la couche de résine chargée côté image comprend : une résine choisie dans le groupe consistant en polyéthylène basse densité (LDPE), et une combinaison de polyéthylène basse densité (LDPE) et de polyéthylène haute densité (HDPE) ; et une charge choisie dans le groupe consistant en carbonate de calcium, zéolite, silice, talc, alumine, trihydrate d'aluminium (ATH), silicate de calcium, kaolin, argile calcinée et leurs combinaisons ;
et dans lequel la couche de résine chargée côté image comprend de 3 % en poids à 60 % en poids de la charge.

2. Article imageable selon la revendication 1, dans lequel la couche de résine chargée comprend de 5 % en poids à 50 % en poids de la charge.

3. Article imageable selon l'une quelconque des revendications 1 ou 2, dans lequel la couche de résine chargée comprend de 10 % en poids à 40 % en poids de la charge.

4. Article imageable selon l'une quelconque des revendications 1 à 3, dans lequel la au moins une couche de revêtement est une couche d'imagerie gonflable ou poreuse.

5. Procédé de revêtement d'un substrat de papier par une couche de résine chargée, comprenant l'étape d'extrusion d'une couche de résine chargée côté arrière sur un côté arrière d'un substrat de papier ;
dans lequel la couche de résine chargée côté arrière comprend : une résine qui est une combinaison de polyéthylène basse densité (LDPE) et de polyéthylène haute densité (HDPE) ; et une charge choisie dans le groupe consistant en carbonate de calcium, silice, talc, alumine, trihydrate d'aluminium (ATH), silicate de calcium, kaolin, argile calcinée et leurs combinaisons ;
et dans lequel la couche de résine chargée côté arrière comprend de 3 % en poids à 60 % en poids de la charge ;
ledit procédé comprenant en outre :
l'extrusion d'une couche de résine chargée côté image sur le côté image du substrat de papier ; et
le revêtement par voie humide d'au moins une couche de revêtement sur à la fois la couche de résine chargée côté image et la couche de résine chargée côté arrière ;
dans lequel la couche de résine chargée côté image comprend : une résine choisie dans le groupe consistant en polyéthylène basse densité (LDPE), et une combinaison de polyéthylène basse densité (LDPE) et de polyéthylène haute densité (HDPE) ; et une charge choisie dans le groupe consistant en carbonate de calcium, zéolite, silice, talc, alumine, trihydrate d'aluminium (ATH), silicate de calcium, kaolin, argile calcinée et leurs combinaisons ;
et dans lequel la couche de résine chargée côté image comprend de 3 % en poids à 60 % en poids de la charge.

6. Procédé selon la revendication 5, dans lequel la couche de résine chargée comprend de 5 % en poids à 50 % en poids de la charge.

7. Procédé selon l'une quelconque des revendications 5 ou 6, dans lequel la couche de résine chargée comprend de 10 % en poids à 40 % en poids de la charge.

8. Procédé selon l'une quelconque des revendications 5 à 7, dans lequel la au moins une couche de revêtement est une couche d'imagerie gonflable ou poreuse.
